# EUROPEAN PATENT APPLICATION

(11) **EP 4 642 046 A1**
(43) Date of publication of application: **29.10.2025**
(21) Application number: 23906468.6
(22) Date of filing: 27.10.2023
(51) Int. Cl.: H04N 25/70, H04N 25/707, H04N 25/773

(54) **PHOTODETECTION DEVICE AND CONTROL METHOD FOR PHOTODETECTION DEVICE**

(30) Priority: 23.12.2022 JP 2022206202
(71) Applicant: Sony Semiconductor Solutions Corporation, Atsugi-shi, Kanagawa 243-0014 (JP)
(72) Inventor: OYAKAWA, Takeshi, Atsugi-shi, Kanagawa 243-0014 (JP); HOGYOKU, Susumu, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/038855
(87) International publication number: WO 2024/135095

(57) **Abstract**

To improve performance of a photodetection device using a neural network circuit.

A photodetection device includes a sensor, a distribution section, and a format conversion section. The sensor reads from a predetermined read address of a pixel array section line data in which a plurality of pieces of pixel data is arranged and outputs the line data. The distribution section generates a plurality of pieces of distribution data from the line data and distributes the distribution data to a plurality of neural network cores. The format conversion section converts a format of the plurality of pieces of distribution data on the basis of the read address.

## Description

### TECHNICAL FIELD

The present technology relates to a photodetection device. Specifically, the present technology relates to a photodetection device using a neural network model and a control method of the photodetection device.

### BACKGROUND ART

In recent years, neural network models have been used in various fields such as image recognition and voice recognition. For example, an integrated circuit has been proposed in which pixel data is converted into a spike packet and processed, and a configuration file defining a connection between a neuron and a synapse is stored in an updatable memory (See, for example, Patent Document 1.).

### CITATION LIST

### PATENT DOCUMENT

Patent Document 1: Japanese Translation of PCT International Application Publication No. 2022-509754

### SUMMARY OF THE INVENTION

### PROBLEMS TO BE SOLVED BY THE INVENTION

In the above-described conventional technology, the configuration file can be updated, so that the neural network can be reconfigured. However, in the above-described circuit, as an output rate of the spike packet increases, congestion (that is, radiation) of the spike packet easily occurs, and there is a problem that performance is deteriorated.

The present technology has been made in view of such a situation, and an object thereof is to improve the performance of a photodetection device using a neural network circuit.

### SOLUTIONS TO PROBLEMS

The present technology has been made to solve the above-described problems, and a first aspect thereof is a photodetection device including: a sensor that reads from a predetermined read address of a pixel array section line data in which a plurality of pieces of pixel data is arranged and outputs the line data; a distribution section that generates a plurality of pieces of distribution data from the line data and distributes the distribution data to a plurality of neural network cores; and a format conversion section that converts a format of the plurality of pieces of distribution data on the basis of the read address, and a control method thereof. This brings about an effect that radiation of packets is suppressed.

Furthermore, in the first aspect, the format conversion section may include a plurality of format converters, and each of the plurality of format converters may include: a memory control section that reads a predetermined number of pieces of packet data from a memory address corresponding to the read address; and a distribution data conversion section that converts the distribution data into a valid signal indicating whether or not a packet corresponding to each piece of the packet data is valid. This brings about an effect that the packet data and the valid signal are transmitted.

Furthermore, in the first aspect, the format conversion section may include a plurality of format converters, and each of the plurality of format converters may include: a memory control section that reads a predetermined number of pieces of compressed data from a memory address corresponding to the read address; a decompression section that generates a predetermined number of pieces of the packet data by decompression for each piece of the compressed data; and a distribution data conversion section that converts the distribution data into a valid signal indicating whether or not a packet corresponding to each piece of the packet data is valid. This brings about an effect that a memory capacity is reduced.

Furthermore, in the first aspect, data sizes of the plurality of pieces of distribution data may be same as each other. This brings about an effect that data of the same size is distributed.

Furthermore, in the first aspect, the distribution section may reduce data sizes of the distribution data as a corresponding pixel group is closer to a center of the pixel array section. This brings about an effect that packet radiation is further suppressed.

Furthermore, in the first aspect, the sensor may include an event-based vision sensor (EVS), and each of the plurality of pieces of pixel data may include 1-bit data indicating whether or not a predetermined event has been detected. This brings about an effect that a valid signal is generated from the line data.

Furthermore, in the first aspect, a pixel data conversion section that converts each of the plurality of pieces of pixel data into 1-bit data may be further included. This brings about an effect that a valid signal is generated from the line data.

Furthermore, in the first aspect, the sensor may include a photon measurement circuit that counts photons. This brings about an effect of improving the performance of a device that counts photons.

Furthermore, in the first aspect, the sensor may include a CMOS image sensor (CIS). This brings about an effect of improving performance of a device using the CIS.

Furthermore, in the first aspect, the sensor, the distribution section, and the format conversion section may be dispersedly disposed on a plurality of stacked chips. This brings about an effect of facilitating the increase in the number of pixels.

### BRIEF DESCRIPTION OF DRAWINGS

Fig. 1 is a block diagram illustrating a configuration example of a photodetection device according to a first embodiment of the present technology.
Fig. 2 is a block diagram illustrating a configuration example of a sensor chip according to the first embodiment of the present technology.
Fig. 3 is a block diagram illustrating a configuration example of an EVS according to the first embodiment of the present technology.
Fig. 4 is a circuit diagram illustrating a configuration example of a pixel according to the first embodiment of the present technology.
Fig. 5 is a block diagram illustrating a configuration example of a spiking neural network (SNN) circuit according to the first embodiment of the present technology.
Fig. 6 is a block diagram illustrating a configuration example of a multi-core array according to the first embodiment of the present technology.
Fig. 7 is a diagram illustrating an example of data before and after distribution according to the first embodiment of the present technology.
Fig. 8 is a block diagram illustrating a configuration example of a format converter according to the first embodiment of the present technology.
Fig. 9 is a diagram illustrating an example of data held in a memory cell array according to the first embodiment of the present technology.
Fig. 10 is a timing chart illustrating an example of an operation of the SNN circuit according to the first embodiment of the present technology.
Fig. 11 is a flowchart illustrating an example of an operation of the photodetection device according to the first embodiment of the present technology.
Fig. 12 is a diagram illustrating an example of a stacked structure of a sensor chip according to a first modification of the first embodiment of the present technology.
Fig. 13 is a circuit diagram illustrating a configuration example of a pixel in the first modification of the first embodiment of the present technology.
Fig. 14 is a diagram illustrating an example of a stacked structure of a sensor chip according to a second modification of the first embodiment of the present technology.
Fig. 15 is a diagram illustrating an example of data before and after distribution according to a second embodiment of the present technology.
Fig. 16 is a block diagram illustrating a configuration example of a format converter according to a third embodiment of the present technology.
Fig. 17 is a block diagram illustrating a configuration example of a sensor chip according to a fourth embodiment of the present technology.
Fig. 18 is a block diagram illustrating a configuration example of a photon measurement circuit according to the fourth embodiment of the present technology.
Fig. 19 is a circuit diagram illustrating a configuration example of a pixel according to the fourth embodiment of the present technology.
Fig. 20 is a block diagram illustrating a configuration example of a sensor chip according to a fifth embodiment of the present technology.
Fig. 21 is a block diagram illustrating a configuration example of a CIS according to the fifth embodiment of the present technology.
Fig. 22 is a circuit diagram illustrating a configuration example of a pixel according to the fifth embodiment of the present technology.
Fig. 23 is a block diagram illustrating a schematic configuration example of a vehicle control system.
Fig. 24 is an explanatory diagram illustrating an example of an installation position of an imaging section.

### MODE FOR CARRYING OUT THE INVENTION

Hereinafter, a mode for carrying out the present technology (hereinafter referred to as an embodiment) will be described. The description will be given in the following order.
1. First embodiment (Example of distributing data to a plurality of cores)
2. Second embodiment (Example of distributing data to a plurality of cores and adjusting a data size of distributed data)
3. Third embodiment (Example of distributing data to a plurality of cores and decompressing compressed data)
4. Fourth embodiment (Example of disposing photon measurement circuit and distributing data to a plurality of cores)
5. Fifth embodiment (Example of disposing a CIS and distributing data to a plurality of cores)
6. Application example to mobile body

### <1. First embodiment>

### [Configuration example of photodetection device]

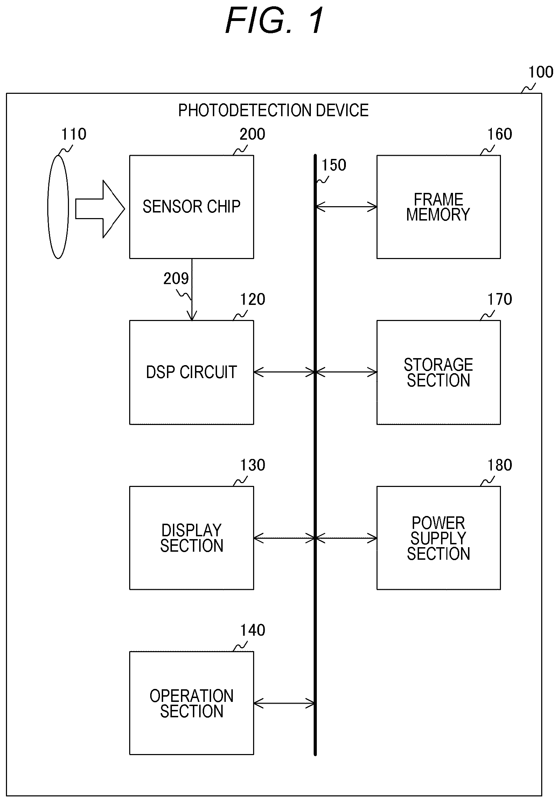

Fig. 1 is a block diagram illustrating a configuration example of the photodetection device 100 according to a first embodiment of the present technology. The photodetection device 100 includes an optical section 110, a sensor chip 200, and a digital signal processing (DSP) circuit 120. The photodetection device 100 further includes a display section 130, an operation section 140, a bus 150, a frame memory 160, a storage section 170, and a power supply section 180. As the photodetection device 100, for example, a smartphone, a personal computer, a vehicle-mounted camera, and the like are assumed in addition to a digital camera such as a digital still camera.

The optical section 110 condenses light from a subject and guides the light to the sensor chip 200. The sensor chip 200 generates and processes a plurality of pieces of pixel data by photoelectric conversion. The sensor chip 200 supplies the processed data to the DSP circuit 120.

The DSP circuit 120 executes predetermined signal processing on data from the sensor chip 200. The DSP circuit 120 outputs the processed data to the frame memory 160 or the like via the bus 150.

The display section 130 displays image data and the like. As the display section 130, for example, a liquid crystal panel or an organic electro luminescence (EL) panel is assumed. The operation section 140 generates an operation signal according to a user's operation.

The bus 150 is a common path for the optical section 110, the sensor chip 200, the DSP circuit 120, the display section 130, the operation section 140, the frame memory 160, the storage section 170, and the power supply section 180 to exchange data with each other.

The storage section 170 stores various types of data such as the image data. The power supply section 180 supplies power to the sensor chip 200, the DSP circuit 120, the display section 130, and the like.

### [Configuration example of sensor chip]

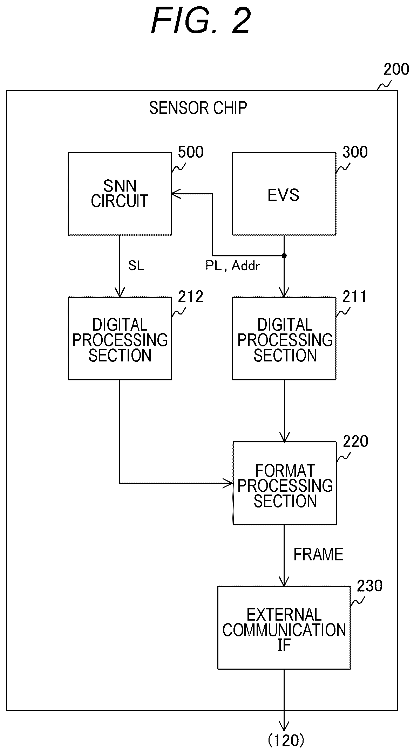

Fig. 2 is a block diagram illustrating a configuration example of the sensor chip 200 according to the first embodiment of the present technology. The sensor chip 200 is a single semiconductor chip and includes an EVS 300, an SNN circuit 500, digital processing sections 211 and 212, a format processing section 220, and an external communication interface 230.

The EVS 300 detects a change in luminance as an event for each pixel. The EVS 300 uses, for example, an arbiter method that is not synchronized with a synchronization signal, and reads line data in which a plurality of pieces of pixel data is arranged as a pixel line (PL) from the pixel array section. Each piece of pixel data is 1-bit data indicating whether or not a predetermined event has been detected. The EVS 300 supplies the address from which the PL is read as the read address Addr to the SNN circuit 500 and the digital processing section 211 together with the PL. Note that the EVS 300 is an example of a sensor recited in the claims. Furthermore, the PL is an example of line data recited in the claims.

The SNN circuit 500 processes each PL on the basis of the SNN model and generates line data as a spike line (SL). The SL is data in which bits indicating whether or not a spike has occurred within a certain period are arranged in chronological order. The SNN circuit 500 outputs the SL to the digital processing section 212.

Note that a neural network (NN) circuit other than the SNN circuit can be used instead of the SNN circuit 500. Furthermore, the SNN circuit 500 is an example of a neural network circuit recited in the claims.

The digital processing section 211 performs various types of digital processing on the PL. The digital processing section 211 supplies a processing result to the format processing section 220.

The digital processing section 212 performs various types of digital processing on the SL. The digital processing section 212 outputs the processing result to the format processing section 220.

The format processing section 220 generates a communication frame storing data from the digital processing sections 211 and 212. The format processing section 220 supplies the generated communication frame to the external communication interface 230.

The external communication interface 230 transmits the communication frame from the format processing section 220 to the DSP circuit 120 or the like. For example, a mobile industry processor interface (MIPI) is used as a communication standard of the external communication interface 230.

### [Configuration example of EVS]

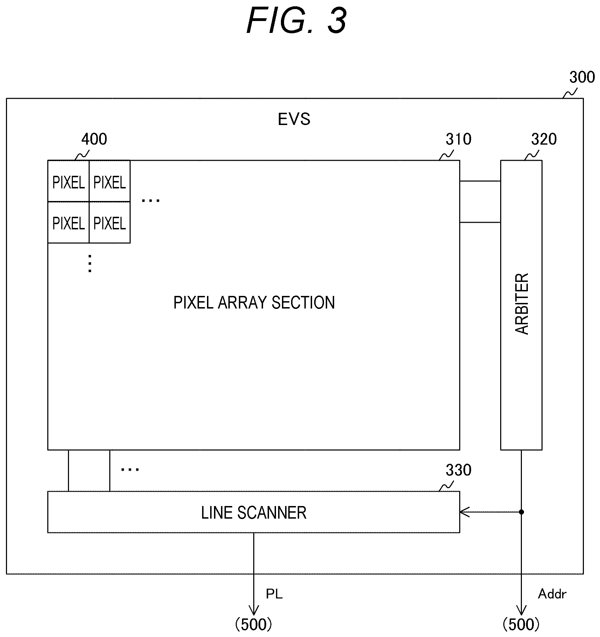

Fig. 3 is a block diagram illustrating a configuration example of the EVS 300 according to the first embodiment of the present technology. The EVS 300 includes a pixel array section 310, an arbiter 320, and a line scanner 330. In the pixel array section 310, a plurality of pixels 400 is arranged in a two-dimensional lattice pattern.

Each of the pixels 400 detects a change in luminance as an event, and transmits and receives a request and a response to and from the arbiter 320 when the event occurs. The pixel 400 that has received the response supplies 1-bit pixel data to the line scanner 330.

The arbiter 320 arbitrates a request in units of columns or rows, and returns a response on the basis of an arbitration result. Furthermore, the arbiter 320 supplies the address of the line (row or column) that returned the response to the line scanner 330 and the SNN circuit 500 as the read address Addr.

The line scanner 330 reads the PL from the read address Addr of the pixel array section 310 and supplies the PL to the SNN circuit 500.

Note that the line scanner 330 performs reading in units of rows and columns, but is not limited to this configuration. For example, the pixel array section 310 may be divided into a plurality of areas, and the line scanner 330 may read a plurality of pieces of pixel data in sections of areas and output line data in which the pieces of pixel data are arranged in a predetermined order as the PL.

In the above-described arbiter method, a plurality of the PLs in the pixel array section 310 is asynchronously read. Furthermore, the read address Addr is output each time the PL is read.

Note that although the EVS 300 uses the arbiter method, it is also possible to use a scan method of reading the PL in synchronization with a synchronization signal (a vertical synchronization signal or a horizontal synchronization signal). In this case, an address addition section that acquires the read address Adrr and adds the read address to the PL is added to the preceding stage of the SNN circuit 500.

### [Configuration example of pixel]

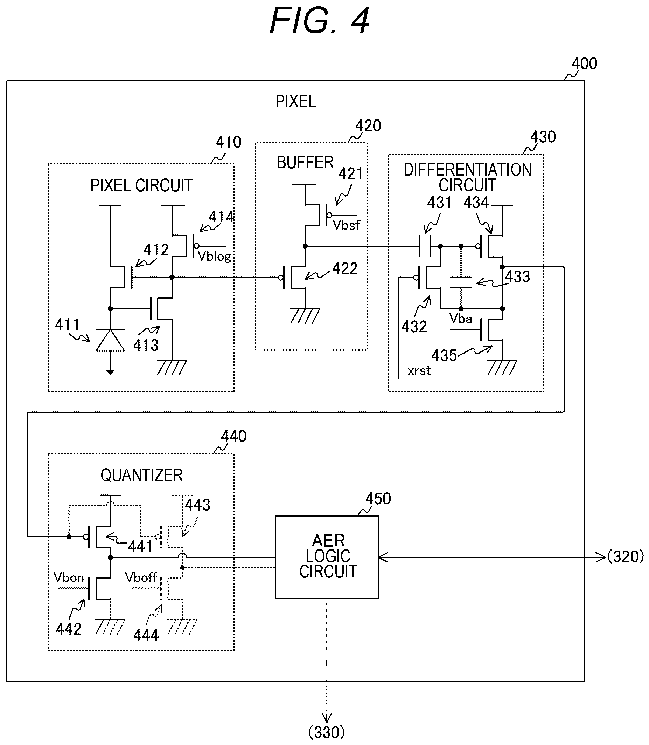

Fig. 4 is a circuit diagram illustrating a configuration example of the pixel 400 according to the first embodiment of the present technology. The pixel 400 includes a pixel circuit 410, a buffer 420, a differentiation circuit 430, a quantizer 440, and an address event representation (AER) logic circuit 450.

The pixel circuit 410 includes a photodiode 411, negative channel MOS (nMOS) transistors 412 and 413, and a positive channel MOS (pMOS) transistor 414.

The photodiode 411 generates a photocurrent by photoelectric conversion with respect to incident light. The nMOS transistor 412 is inserted between a power supply and the photodiode 411. The pMOS transistor 414 and the nMOS transistor 413 are connected in series between the power supply and a ground terminal. Furthermore, the gate of the nMOS transistor 413 is connected to the connection point of the nMOS transistor 412 and the photodiode 411, and a bias voltage Vblog is applied to the gate of the pMOS transistor 414.

The buffer 420 includes pMOS transistors 421 and 422 connected in series between a power supply and a ground terminal. The gate of the ground side pMOS transistor 422 is connected to a connection point of the pMOS transistor 414 and the nMOS transistor 413. A bias voltage Vbsf is applied to the gate of the pMOS transistor 421 on the power supply side. Furthermore, a connection point of the pMOS transistors 421 and 422 is connected to the differentiation circuit 430.

A voltage signal according to the photocurrent is generated by the above-described circuit and output from the buffer 420.

The differentiation circuit 430 includes capacitors 431 and 433, pMOS transistors 432 and 434, and an nMOS transistor 435.

One end of the capacitor 431 is connected to the buffer 420, and the other end is connected to one end of the capacitor 433 and the gate of the pMOS transistor 434. A reset signal xrst is input to the gate of the pMOS transistor 432, and the source and the drain are connected to both ends of the capacitor 433. The pMOS transistor 434 and the nMOS transistor 435 are connected in series between the power supply and the ground terminal. Furthermore, the other end of the capacitor 433 is connected to a connection point of the pMOS transistor 434 and the nMOS transistor 435. A bias voltage Vba is applied to the gate of the nMOS transistor 435 on the ground side, and the connection point of the pMOS transistor 434 and the nMOS transistor 435 is also connected to the quantizer 440. By such connection, a differentiation signal indicating a change amount of the voltage signal is generated and output to the quantizer 440. Furthermore, the differentiation signal is initialized by the reset signal xrst.

The quantizer 440 includes a pMOS transistor 441 and an nMOS transistor 442 connected in series between the power supply and the ground terminal. The gate of the pMOS transistor 441 is connected to the differentiation circuit 430, and a predetermined upper limit threshold Vbon is applied to the gate of the nMOS transistor 442. A voltage signal at a connection point between the pMOS transistor 441 and the nMOS transistor 442 is output to the AER logic circuit 450 as a detection signal of a change in luminance.

In the drawing, an on event is detected when the differentiation signal indicating the change in luminance exceeds the upper limit threshold Vbon. Note that the pixel 400 can also detect an off event when the differentiation signal falls below a lower limit threshold Vboff. In this case, a pMOS transistor 443 and an nMOS transistor 444 connected in series between the power supply and the ground terminal are added. The gate of the pMOS transistor 443 is connected to the differentiation circuit 430, and the lower limit threshold Vboff is applied to the gate of the nMOS transistor 444. The pixel 400 may detect both the on event and the off event, or may detect only one of them.

The AER logic circuit 450 transmits and receives a request and a response to and from the arbiter 320 when an event occurs. When receiving the response, the AER logic circuit 450 supplies pixel data indicating a detection result to the line scanner 330.

Note that in a case where the pixel 400 detects both an on event and an off event, each piece of pixel data is 2 bits. In this case, a pixel data conversion section that converts each piece of pixel data into 1-bit data is added to a preceding stage of the SNN circuit 500.

### [Configuration example of SNN circuit]

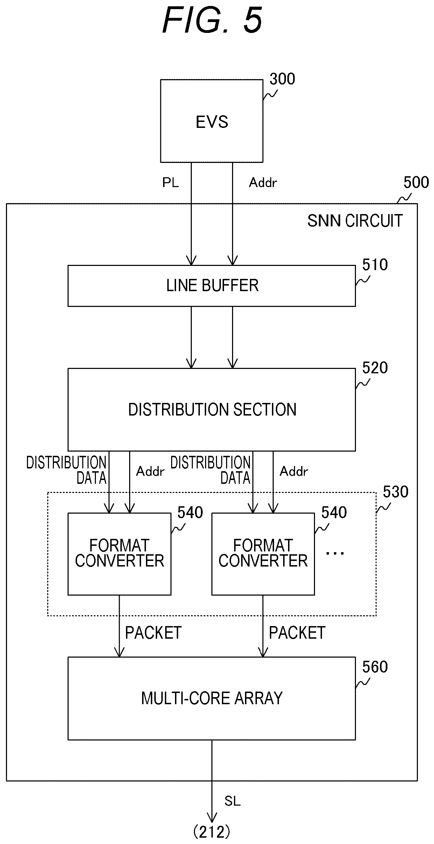

Fig. 5 is a block diagram illustrating a configuration example of the SNN circuit 500 according to the first embodiment of the present technology. The SNN circuit 500 includes a line buffer 510, a distribution section 520, a format conversion section 530, and a multi-core array 560. In the format conversion section 530, M (M is an integer of 2 or more) format converters 540 are disposed. Furthermore, N (N is an integer of M or more) SNN cores (not illustrated) are disposed in the multi-core array 560. Different SNN cores are allocated to the format converters 540.

The line buffer 510 holds a PL and a read address Addr from the EVS 300. The PL and the read address Addr are read by the distribution section 520. For example, a first in, first out (FIFO) memory is used as the line buffer 510.

The distribution section 520 generates M pieces of data from the PL as distribution data and distributes the generated data to the M SNN cores. Different SNN cores are allocated as distribution destinations to each piece of distribution data. Furthermore, the distribution section 520 supplies the distribution data and the read address Addr to the format converter 540 corresponding to the distribution destination.

The format converter 540 converts the format of the distribution data on the basis of the read address Addr and generates a packet. Details of the conversion method will be described later. The format converter 540 provides packets to corresponding SNN cores in the multi-core array 560.

The multi-core array 560 processes each of the packets on the basis of the SNN model. The multi-core array 560 generates the SL and outputs the SL to the digital processing section 212.

As described above, since the distribution section 520 distributes the plurality of distribution data obtained from the PL to the plurality of SNN cores, the plurality of distribution data can be processed in parallel by the SNN cores. Therefore, even in a case where the output rate of the PL is high, radiation of packets is less likely to occur, and the performance of the photodetection device 100 can be improved.

### [Configuration example of multi-core array]

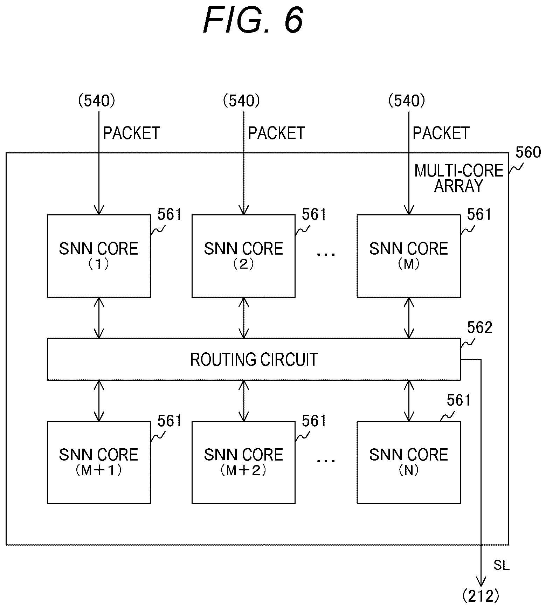

Fig. 6 is a block diagram illustrating a configuration example of the multi-core array 560 according to the first embodiment of the present technology. The multi-core array 560 includes N SNN cores 561 and a routing circuit 562.

The packets from the corresponding format converters 540 are input to the M SNN cores 561 among the N SNN cores. The SNN core 561 processes the packet and provides a processing result to the routing circuit 562.

The routing circuit 562 controls a packet transmission path. Furthermore, the routing circuit 562 supplies the SL to the digital processing section 212.

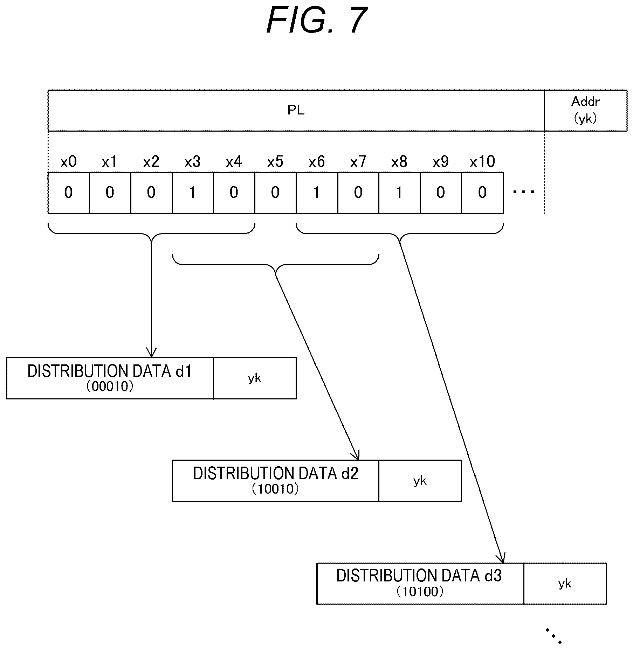

Fig. 7 is a diagram illustrating an example of data before and after distribution according to the first embodiment of the present technology. As described above, a plurality of pieces of pixel data is arranged in the PL, and each piece of pixel data is 1-bit data indicating a detection result of an event. In the drawing, x1 to x10 indicate addresses of pixels (columns and the like) in the line, respectively. A logical value "0" indicates that no event was detected in the corresponding pixel, and a logical value "1" indicates that an event was detected in the corresponding pixel.

The distribution section 520 extracts M bit strings from the PL as distribution data and distributes the extracted bit strings to M SNN cores. In distribution, it is assumed that a column in certain distribution data can be assigned to another distribution data. For example, it is assumed that a bit string "00010" of a column from x0 to x4 is set as the distribution data d1 corresponding to the first SNN core. At this time, the distribution section 520 can set the bit string "10010" of the x3 to x7 columns as the distribution data d2 corresponding to the second SNN core.

The data sizes of the distribution data are assumed to be the same. Furthermore, in a case where the multi-core array 560 constitutes a convolutional neural network (CNN), the bit depth of each piece of distribution data is determined according to, for example, the maximum size of the kernel used in the CNN.

Furthermore, the distribution section 520 supplies the read address Addr to each of the M format converters 540 together with the corresponding distribution data. In the drawing, yk is supplied as the read address Addr to each of the format converters 540.

### [Configuration example of format converter]

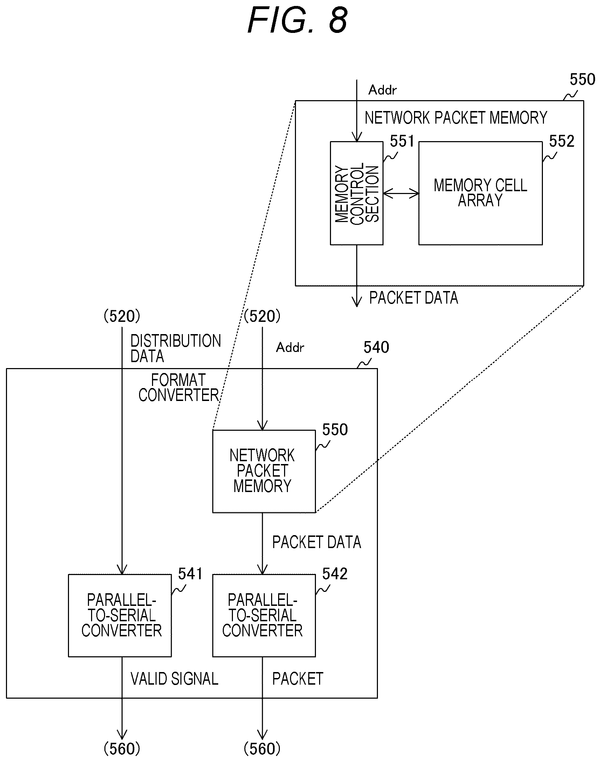

Fig. 8 is a block diagram illustrating a configuration example of the format converter 540 according to the first embodiment of the present technology. The format converter 540 includes a network packet memory 550 and parallel to serial converters 541 and 542. The network packet memory 550 includes a memory control section 551 and a memory cell array 552.

In the memory cell array 552, a predetermined number of pieces of packet data are held at each of a plurality of memory addresses. A transmission source address, a transmission destination address, and data are stored in each piece of packet data. Furthermore, each of the memory addresses is associated with an address of a line of the pixel array section 310 in the EVS 300. Furthermore, the number of pieces of packet data for each memory address is the same as the bit depth of the distribution data. In a case where the number of lines of the pixel array section 310 is k (k is an integer) and the distribution data is q (q is an integer) bits, q pieces of packet data are stored in each of the k memory addresses.

The read address Addr from the distribution section 520 is input to the memory control section 551. The memory control section 551 reads q pieces of packet data from the memory address corresponding to the read address Addr and supplies the packet data to the parallel to serial converter 542 in a parallel manner.

The parallel to serial converter 542 converts q pieces of packet data, which are parallel data, into serial data and outputs the serial data to the multi-core array 560 as packets.

The distribution data from the distribution section 520 is input to the parallel to serial converter 541 in a parallel manner. The parallel to serial converter 541 converts the q-bit distribution data into serial data and outputs the serial data to the multi-core array 560 as a valid signal. The valid signal of q bits indicates whether or not each packet corresponding to each of q pieces of packet data is valid. Note that the parallel to serial converter 541 is an example of a distribution data conversion section recited in the claims.

The SNN core 561 at the subsequent stage receives the packet and the valid signal, and processes the valid packet indicated by the valid signal. Note that the SNN core 561 is an example of a neural network core recited in the claims.

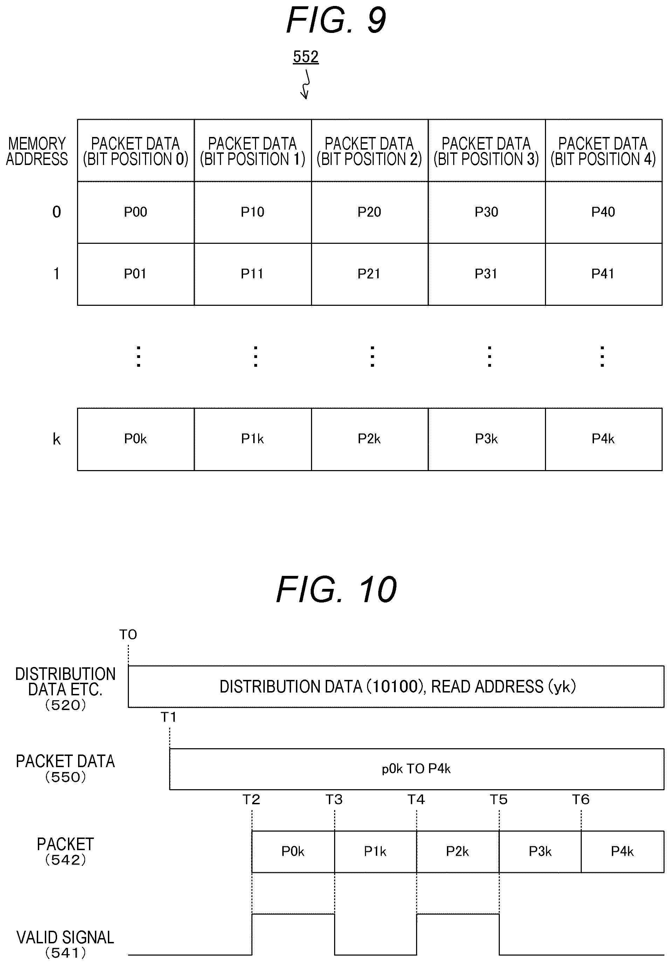

Fig. 9 is a diagram illustrating an example of data held in the memory cell array according to the first embodiment of the present technology. Assuming that the number of lines is k and the bit depth of the distribution data is 5 bits, five pieces of packet data are held in each of the k memory addresses. For example, five pieces of packet data P0k, P1k, P2k, P3k, and P4k are held in the kth memory address corresponding to the kth line.

### [Operation example of photodetection device]

Fig. 10 is a timing chart illustrating an example of an operation of the SNN circuit 500 according to the first embodiment of the present technology. It is assumed that the distribution section 520 outputs the distribution data of "10100" and the read address of "yk" to the format converter 540 at timing T0.

The network packet memory 550 reads the packet data of P0k to P4k from the memory address corresponding to yk at timing T2, and supplies the packet data to the parallel to serial converter 542 by the parallel method.

Then, the parallel to serial converter 542 converts each of the packet data into serial data after timing T2 and outputs the serial data as a packet. P0k is output during a period from timing T2 to T3, and P1k is output during a period from timing T3 to T4. P2k is output during a period from timing T4 to timing T5, and P3k is output during a period from timing T5 to timing T6. P4k is output after timing T6.

On the other hand, the parallel to serial converter 541 converts the distribution data into serial data and outputs the serial data as a valid signal after timing T2. The logical value "1" is output in the period from the timing T2 to T3, and the logical value "0" is output in the period from the timing T3 to T4. The logical value "1" is output during a period from timing T4 to timing T5, and the logical value "0" is output after timing T5. The logical value "1" indicates that the corresponding packet data is valid.

The SNN core 561 at the subsequent stage processes valid P0k and P2k among the packets P0k to P4k.

As illustrated in the drawing, the format converter 540 converts the format of the distribution data, so that the SNN core 561 can receive and process an appropriate packet.

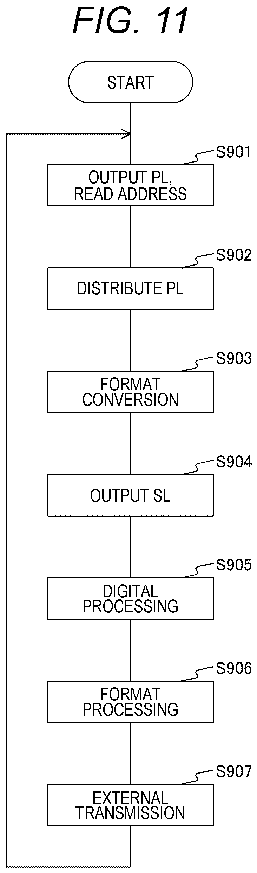

Fig. 11 is a flowchart illustrating an example of an operation of the photodetection device 100 according to the first embodiment of the present technology. The EVS 300 reads the PL and outputs the PL together with the read address (step S901).

The distribution section 520 generates a plurality of distribution data from the PL and distributes the plurality of distribution data to a plurality of SNN cores (step S902). The format converter 540 performs format conversion of the distribution data on the basis of the read address (step S903). The multi-core array 560 processes the packet and outputs the SL (step S904).

Furthermore, the digital processing sections 211 and 212 process the PL and the SL (step S905), and the format processing section 220 performs format processing for generating a communication frame (step S906). Then, the external communication interface 230 externally transmits the communication frame (step S907). After step S907, the photodetection device 100 repeatedly executes step S901 and subsequent steps.

As described above, according to the first embodiment of the present technology, since the distribution section 520 generates a plurality of distribution data from the PL and distributes the distribution data to a plurality of SNN cores, the plurality of distribution data can be processed in parallel by the SNN cores. Therefore, even in a case where the output rate of the PL is high, radiation of packet data is less likely to occur, and the performance of the photodetection device 100 can be improved.

### [First modification]

In the first embodiment described above, a circuit such as the EVS 300 is disposed on a single semiconductor chip, but in this configuration, it may be difficult to increase the number of pixels. A photodetection device 100 according to a first modification of the first embodiment is different from that of the first embodiment in that circuits are dispersedly disposed on two stacked semiconductor chips.

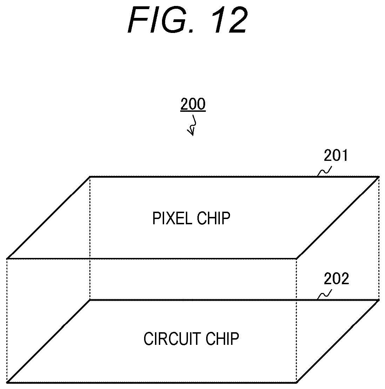

Fig. 12 is a diagram illustrating an example of a stacked structure of a sensor chip 200 in the first modification of the first embodiment of the present technology. The sensor chip 200 according to the first modification of the first embodiment includes a pixel chip 201 and a circuit chip 202. These chips are stacked and are electrically connected by, for example, Cu-Cu bonding. Note that, in addition to the Cu-Cu bonding, the connection can be made using a via or a bump.

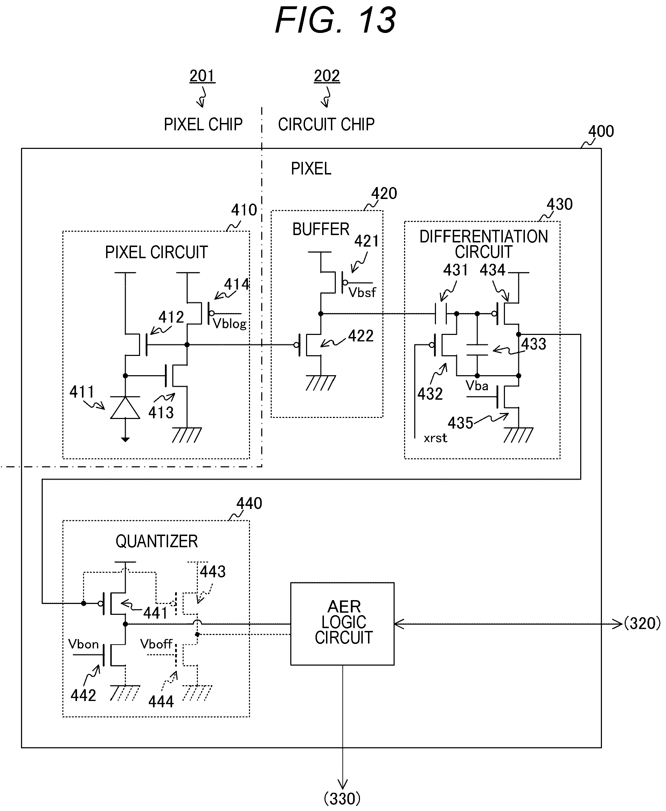

Fig. 13 is a circuit diagram illustrating a configuration example of the pixel 400 in the first modification of the first embodiment of the present technology. Among the pixels 400, for example, the pixel circuit 410 is disposed on the pixel chip 201, and circuits subsequent to the buffer 420 are disposed on the circuit chip 202.

Note that the circuits arranged on the respective chips are not limited to those illustrated in the drawing. For example, the photodiode 411 and the nMOS transistors 412 and 413 may be disposed in the pixel chip 201, and the remaining circuits may be disposed in the circuit chip 202. Alternatively, only the photodiode 411 may be disposed in the pixel chip 201, and the remaining circuits may be disposed in the circuit chip 202.

As described above, according to the first modification of the first embodiment of the present technology, since the circuits are dispersedly disposed in the two stacked chips, the circuit scale per chip can be reduced. This facilitates the increase in the number of pixels.

### [Second modification]

In the first embodiment described above, a circuit such as the EVS 300 is disposed on a single semiconductor chip, but in this configuration, it may be difficult to increase the number of pixels. A photodetection device 100 according to a second modification of the first embodiment is different from that of the first embodiment in that circuits are dispersedly disposed on three stacked semiconductor chips.

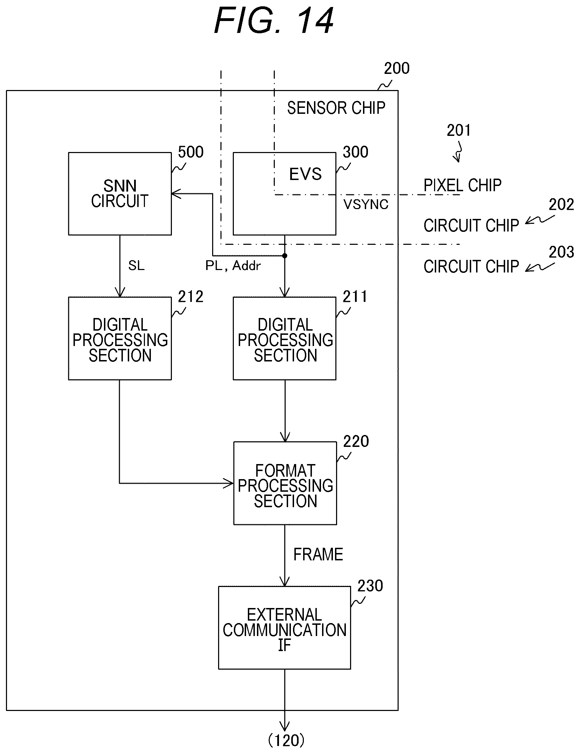

Fig. 14 is a diagram illustrating an example of a stacked structure of a sensor chip 200 in the second modification of the first embodiment of the present technology. In the second modification of the first embodiment, the sensor chip 200 includes a pixel chip 201, circuit chip 202, and circuit chip 203 which are stacked. Some of the pixels of EVS 300 (such as pixel circuits 410) are disposed on the pixel chip 201 and the remaining circuits of EVS 300 are disposed on the circuit chip 202. Furthermore, circuits subsequent to the digital processing section 211 and the SNN circuit 500 are disposed on the circuit chip 203. Note that the circuits arranged on the respective chips are not limited to those illustrated in the drawing. Furthermore, the number of chips to be stacked is not limited to three, and may be four or more.

As described above, according to the second modification of the first embodiment of the present technology, since the circuits are dispersedly disposed in the three stacked chips, the circuit scale per chip can be reduced. This facilitates the increase in the number of pixels.

### <2. Second embodiment>

In the first embodiment described above, the data sizes of the distribution data are the same, but the present technology is not limited to this configuration. A photodetection device 100 according to the second embodiment is different from that of the first embodiment in that a data size of the distribution data is made smaller as a corresponding pixel group is closer to a center of a pixel array section 310.

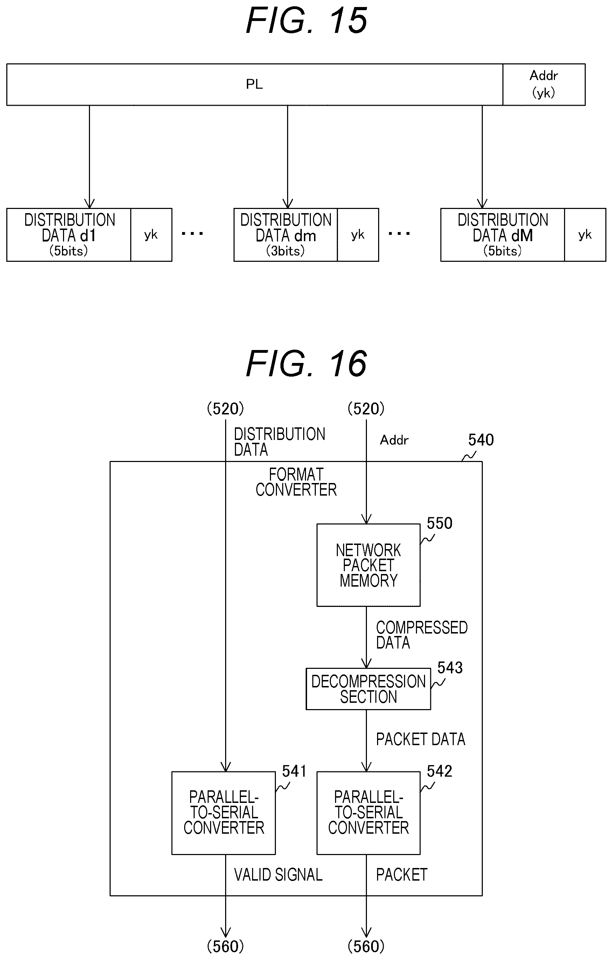

Fig. 15 is a diagram illustrating an example of data before and after distribution according to the second embodiment of the present technology. In the second embodiment, a distribution section 520 adjusts the data size according to the position of the pixel group corresponding to the distribution data. In general, an object often appears at the center of the EVS 300, and a spike tends to easily occur at the center. Therefore, the distribution section 520 reduces the data size of the distribution data as the corresponding pixel group is closer to the center of the pixel array section 310.

For example, it is assumed that the pixel group corresponding to the distribution data d1 and dM is far from the center of the pixel array section 310, and the pixel group corresponding to the distribution data dm is located near the center of the pixel array section 310. In this case, the distribution section 520 makes the data size of the distribution data dm smaller than the distribution data d1 and dM. For example, three bits are allocated to the distribution data dm, and five bits are allocated to the distribution data d1 and dM. Therefore, the radiation of the spike data can be further suppressed.

Note that each of the first and second modifications of the first embodiment can be applied to the second embodiment.

As described above, according to the second embodiment of the present technology, the distribution section 520 decreases the data size of the distribution data as the corresponding pixel group is closer to the center of the pixel array section 310, and thus, it is possible to further suppress the radiation of the spike data.

### <3. Third embodiment>

In the above-described first embodiment, the format converter 540 holds the packet data in the network packet memory 550. However, as the data size and the number of pieces of packet data increase, a necessary memory capacity increases. A photodetection device 100 in a third embodiment is different from that in the first embodiment in that a network packet memory 550 holds compressed data.

Fig. 16 is a block diagram illustrating a configuration example of a format converter 540 according to the third embodiment of the present technology. The format converter 540 according to the third embodiment is different from that of the first embodiment in further including a decompression section 543.

Furthermore, in the third embodiment, it is assumed that data obtained by compressing packet data by a lossless compression method is held in a network packet memory 550.

The network packet memory 550 reads q pieces of compressed data from a memory address corresponding to the read address Addr and supplies the compressed data to the decompression section 543.

The decompression section 543 generates packet data by decompressing the compressed data from the network packet memory 550 and supplies the packet data to the parallel to serial converter 542.

As described above, by causing the network packet memory 550 to hold the compressed data, the memory capacity can be reduced as compared with the first embodiment.

Note that the first and second modifications of the first embodiment and the second embodiment can be applied to the third embodiment.

As described above, according to the third embodiment of the present technology, since the network packet memory 550 holds the compressed data, the memory capacity can be reduced.

### <4. Fourth embodiment>

In the first embodiment described above, the EVS 300 is used as a sensor that generates the PL, but a photon measurement circuit that counts photons can also be used instead of the EVS 300. A photodetection device 100 according to a fourth embodiment is different from that of the first embodiment in that a photon measurement circuit is used instead of the EVS 300.

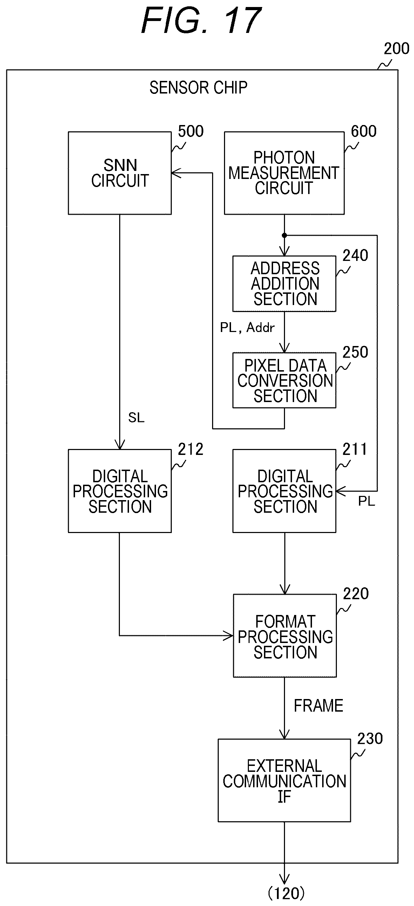

Fig. 17 is a block diagram illustrating a configuration example of a sensor chip 200 according to the fourth embodiment of the present technology. The sensor chip 200 in the fourth embodiment is different from that in the first embodiment in that a photon measurement circuit 600 is disposed instead of the EVS 300. Note that the photon measurement circuit 600 is an example of a sensor recited in the claims.

Furthermore, an address addition section 240 and a pixel data conversion section 250 are further disposed on the sensor chip 200.

The address addition section 240 adds a read address Addr to the PL. The photon measurement circuit 600 described above generates a PL in synchronization with a synchronization signal such as a vertical synchronization signal or a horizontal synchronization signal. The address addition section 240 acquires the read address Adrr of the PL by processing such as counting the count value in synchronization with the synchronization signal or the like, adds the read address to the PL, and supplies the read address to the pixel data conversion section 250.

The pixel data conversion section 250 converts each piece of pixel data into 1-bit data. For example, the pixel data conversion section 250 compares the value of the pixel data with a predetermined threshold, and generates a bit indicating the comparison result as data after conversion. The pixel data conversion section 250 supplies the converted PL to the SNN circuit 500 together with the read address Addr.

Note that the address addition section 240 may be disposed at a subsequent stage of the pixel data conversion section 250.

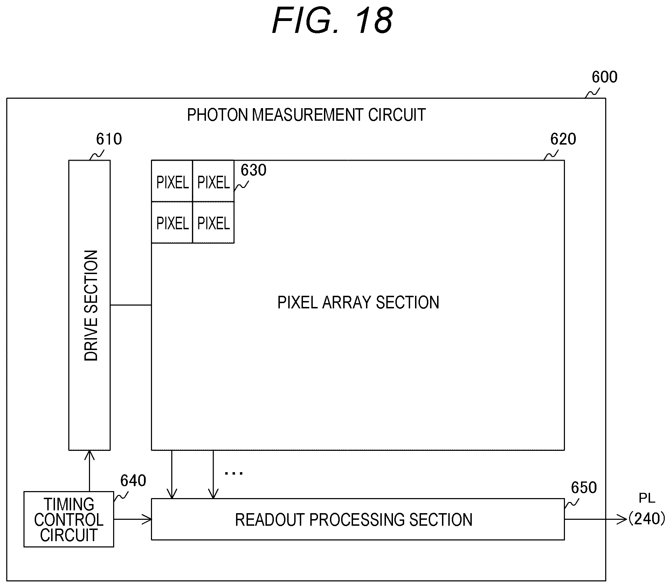

Fig. 18 is a block diagram illustrating a configuration example of the photon measurement circuit 600 according to the fourth embodiment of the present technology. The photon measurement circuit 600 includes a drive section 610, a pixel array section 620, a timing control circuit 640, and a readout processing section 650. In the pixel array section 620, a plurality of pixels 630 is arranged in a two-dimensional lattice pattern.

The drive section 610 drives each of the pixels 400. The timing control circuit 640 controls timing to drive the drive section 610 and the readout processing section 650. A vertical synchronization signal is input to the timing control circuit 640. The timing control circuit 640 generates a horizontal synchronization signal from the vertical synchronization signal and supplies the horizontal synchronization signal to the readout processing section 650. The readout processing section 650 sequentially selects lines in synchronization with the horizontal synchronization signal and reads the PL.

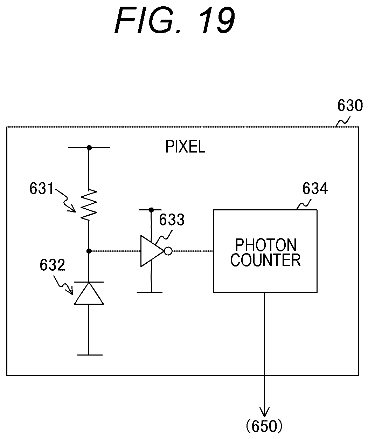

Fig. 19 is a circuit diagram illustrating a configuration example of the pixel 630 according to the fourth embodiment of the present technology. The pixel 630 includes a quench resistor 631, a single-photon avalanche diode (SPAD) 632, an inverter 633, and a photon counter 634.

The quench resistor 631 and the SPAD 632 are connected in series. The inverter 633 inverts a voltage signal at a connection point between the quench resistor 631 and the SPAD 632 and supplies the inverted voltage signal as a pulse signal to the photon counter 634. The photon counter 634 counts the number of pulses of the pulse signal and supplies pixel data indicating the count value to the readout processing section 650.

In the case of counting photons, each piece of pixel data in the PL is a bit string of two or more bits indicating a count value. For this reason, as described above, each piece of pixel data is converted into 1-bit data by the pixel data conversion section 250 in the subsequent stage.

Note that the circuit configuration of the pixel 630 is not limited to that illustrated in the drawing as long as photons can be counted.

Furthermore, each of the first and second modifications of the first embodiment, the second embodiment, and the third embodiment can be applied to the fourth embodiment.

As described above, according to the fourth embodiment of the present technology, since the photon measurement circuit 600 is disposed instead of the EVS 300, the performance of the photodetection device 100 that counts photons can be improved.

### <5. Fifth embodiment>

In the first embodiment described above, the EVS 300 is used as a sensor that generates the PL, but a CIS can be used instead of the EVS 300. A photodetection device 100 according to a fifth embodiment is different from that of the first embodiment in that a CIS is used instead of the EVS 300.

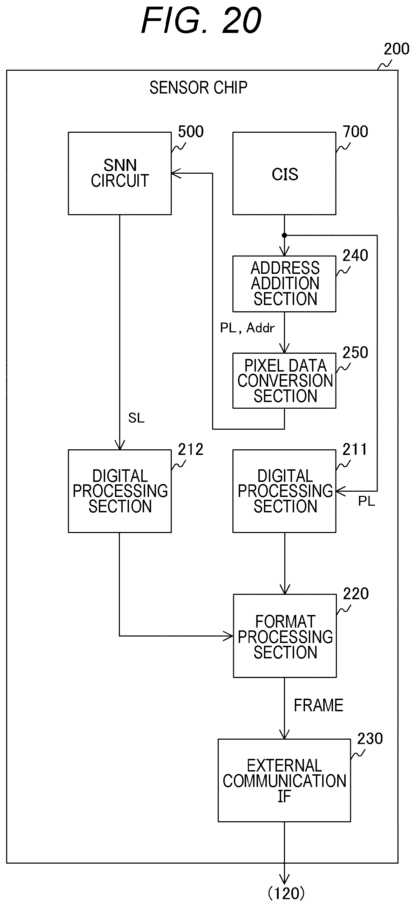

Fig. 20 is a block diagram illustrating a configuration example of a sensor chip 200 according to the fifth embodiment of the present technology. The sensor chip 200 in the fifth embodiment is different from that in the first embodiment in that a CIS 700 is disposed instead of the EVS 300. Note that the CIS 700 is an example of a sensor recited in the claims.

Furthermore, an address addition section 240 and a pixel data conversion section 250 are further disposed on the sensor chip 200.

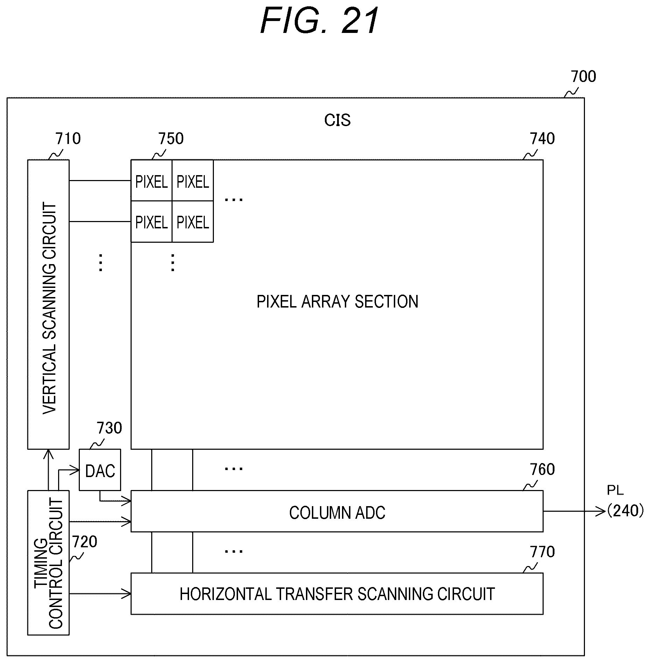

Fig. 21 is a block diagram illustrating a configuration example of the CIS 700 according to the fifth embodiment of the present technology. The CIS 700 includes a vertical scanning circuit 710, a timing control circuit 720, a digital to analog converter (DAC) 730, a pixel array section 740, a column ADC 760, and a horizontal transfer scanning circuit 770. In the pixel array section 740, the pixels 750 are arranged in a two-dimensional lattice pattern.

The vertical scanning circuit 710 sequentially selects and drives rows and outputs analog pixel signals to the column ADC 760. The timing control circuit 720 generates a horizontal synchronization signal from a vertical synchronization signal and supplies the horizontal synchronization signal to the horizontal transfer scanning circuit 770.

The DAC 730 generates a predetermined reference signal and supplies the generated reference signal to the column ADC 760. For example, a sawtooth-shaped ramp signal is used as the reference signal.

The column ADC 760 includes an ADC for each column, and performs analog to digital (AD) conversion on each pixel signal of the column. The column ADC 760 generates the PL according to the control of the horizontal transfer scanning circuit 770 and outputs the PL to the digital processing section 211 or the like.

The horizontal transfer scanning circuit 770 controls the column ADC 760 to sequentially output the pixel data.

As described above, in the CIS 700, each piece of pixel data in the PL is a bit string of 2 bits or more indicating the gradation value of the pixel. For this reason, as described above, each piece of pixel data is converted into 1-bit data by the pixel data conversion section 250 in the subsequent stage.

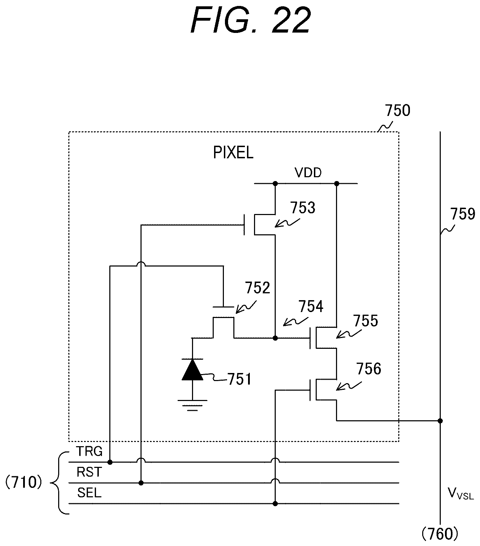

Fig. 22 is a circuit diagram illustrating a configuration example of the pixel 750 according to the fifth embodiment of the present technology. The pixel 750 includes a photodiode 751, a transfer transistor 752, a reset transistor 753, a floating diffusion layer 754, an amplification transistor 755, and a selection transistor 756.

The photodiode 751 photoelectrically converts incident light to generate a charge. The transfer transistor 752 transfers a charge from the photodiode 751 to the floating diffusion layer 754 in accordance with a transfer signal TRG from the vertical scanning circuit 710.

The reset transistor 753 extracts and initializes charges from the floating diffusion layer 754 in accordance with a reset signal RST from the vertical scanning circuit 710. The floating diffusion layer 754 accumulates charges and generates a voltage corresponding to the charge amount.

The amplification transistor 755 amplifies the voltage of the floating diffusion layer 754. The selection transistor 756 outputs a signal of the amplified voltage as a pixel signal according to a selection signal SEL from the vertical scanning circuit 710.

Furthermore, in the pixel array section 740, a vertical signal line 759 is wired for each column, and the pixel signal of each of the pixels 750 in the column is output to the column ADC 760 via the vertical signal line 759 of the column.

Note that the circuit configuration of the pixel 750 is not limited to the configuration illustrated in the drawing as long as an analog pixel signal can be generated.

Furthermore, each of the first and second modifications of the first embodiment, the second embodiment, and the third embodiment can be applied to the fifth embodiment.

As described above, according to the fifth embodiment of the present technology, since the CIS 700 is disposed instead of the EVS 300, the performance of the photodetection device 100 that generates gradation data can be improved.

### <6. Application example to mobile body>

The technology (the present technology) according to the present disclosure can be applied to various products. For example, the technology according to an embodiment of the present disclosure may also be implemented as a device mounted on any type of mobile body such as an automobile, an electric automobile, a hybrid electric automobile, a motorcycle, a bicycle, a personal mobility, an airplane, a drone, a ship, and a robot.

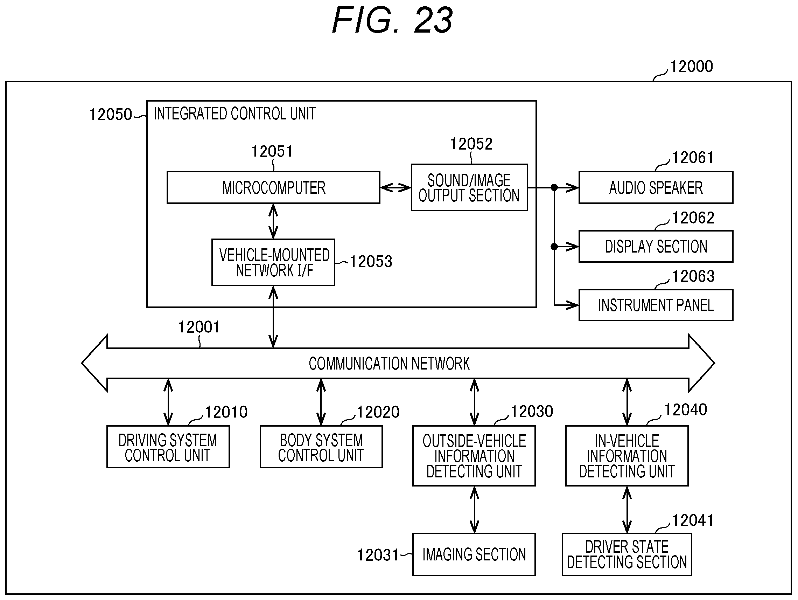

Fig. 23 is a block diagram illustrating a schematic configuration example of a vehicle control system which is an example of a mobile body control system to which the technology of the present disclosure can be applied.

The vehicle control system 12000 includes a plurality of electronic control units connected to each other via a communication network 12001. In the example illustrated in Fig. 23, the vehicle control system 12000 includes a driving system control unit 12010, a body system control unit 12020, an outside-vehicle information detecting unit 12030, an in-vehicle information detecting unit 12040, and an integrated control unit 12050. Furthermore, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

Furthermore, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of Fig. 23, an audio speaker 12061, a display section 12062, and an instrument panel 12063 are illustrated as the output device. The display section 12062 may, for example, include at least one of an on-board display and a head-up display.

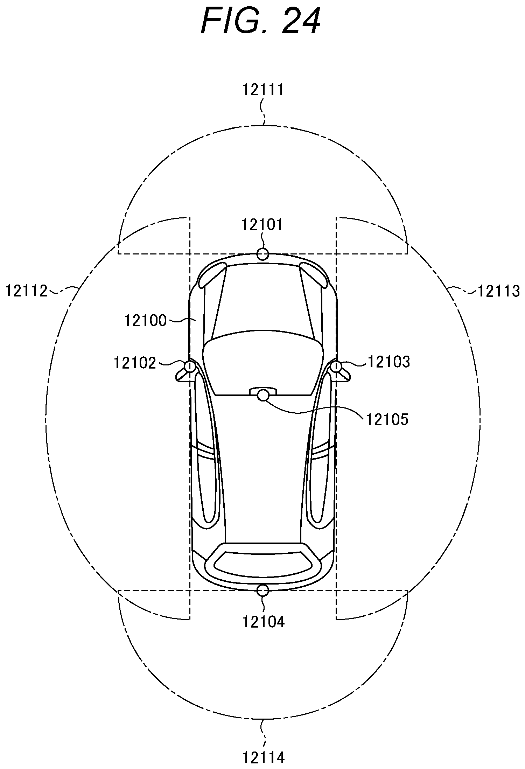

Fig. 24 is a diagram illustrating an example of the installation position of the imaging section 12031.

In Fig. 24, imaging sections 12101, 12102, 12103, 12104, and 12105 are included as the imaging section 12031.

The imaging sections 12101, 12102, 12103, 12104, 12105 are provided, for example, at positions such as a front nose, a sideview mirror, a rear bumper, a back door, and an upper portion of a windshield in the interior of a vehicle 12100. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Note that Fig. 24 illustrates an example of imaging ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of the vehicle control system to which the technology according to the present disclosure can be applied has been described above. The technology according to the present disclosure can be applied to, for example, the imaging section 12031 among the configurations described above. Specifically, the photodetection device 100 of Fig. 1 can be applied to the imaging section 12031. By applying the technology according to the present disclosure to the imaging section 12031, it is possible to suppress radiation of packet data and improve the performance of the system.

Note that the embodiments described above show examples for embodying the present technology, and the matters in the embodiments and the matters specifying the invention in the claims have correspondence relationships. Similarly, the matters specifying the invention in the claims and matters with the same names in the embodiments of the present technology have correspondence relationships. However, the present technology is not limited to the embodiments, and can be embodied by applying various modifications to the embodiments without departing from the gist of the present technology.

Note that the effects described in the present description are merely exemplifications and are not limited, and furthermore, other effects may be provided.

Note that the present technology may also have the following configurations.
(1) A photodetection device including:
   a sensor that reads from a predetermined read address of a pixel array section line data in which a plurality of pieces of pixel data is arranged and outputs the line data;
   a distribution section that generates a plurality of pieces of distribution data from the line data and distributes the distribution data to a plurality of neural network cores; and
   a format conversion section that converts a format of the plurality of pieces of distribution data on the basis of the read address.
(2) The photodetection device according to (1) described above, in which
   the format conversion section includes a plurality of format converters, and
   each of the plurality of format converters includes:
      a memory control section that reads a predetermined number of pieces of packet data from a memory address corresponding to the read address; and
      a distribution data conversion section that converts the distribution data into a valid signal indicating whether or not a packet corresponding to each piece of the packet data is valid.
(3) The photodetection device according to (1) described above, in which
   the format conversion section includes a plurality of format converters, and
   each of the plurality of format converters includes:
      a memory control section that reads a predetermined number of pieces of compressed data from a memory address corresponding to the read address;
      a decompression section that generates a predetermined number of pieces of the packet data by decompression for each piece of the compressed data; and
      a distribution data conversion section that converts the distribution data into a valid signal indicating whether or not a packet corresponding to each piece of the packet data is valid.
(4) The photodetection device according to (1) or (2) described above, in which
   data sizes of the plurality of pieces of distribution data are same as each other.
(5) The photodetection device according to (1) or (2) described above, in which
   the distribution section reduces data sizes of the distribution data as a corresponding pixel group is closer to a center of the pixel array section.
(6) The photodetection device according to any one of (1) to (5) described above, in which
   the sensor includes an event-based vision sensor (EVS), and
   each of the plurality of pieces of pixel data includes 1-bit data indicating whether or not a predetermined event has been detected.
(7) The photodetection device according to any one of (1) to (5) described above, further including
   a pixel data conversion section that converts each of the plurality of pieces of pixel data into 1-bit data.
(8) The photodetection device according to (7) described above, in which
   the sensor includes a photon measurement circuit that counts photons.
(9) The photodetection device according to (7) described above, in which
   the sensor includes a CMOS image sensor (CIS).
(10) The photodetection device according to any one of (1) to (9) described above, in which
   the sensor, the distribution section, and the format conversion section are dispersedly disposed on a plurality of stacked chips.
(11) A control method of a photodetection device, the control method including:
   a readout procedure of, by a sensor, reading from a predetermined read address of a pixel array section line data in which a plurality of pieces of pixel data is arranged and outputting the line data;
   a distribution procedure of generating a plurality of pieces of distribution data from the line data and distributing the distribution data to a plurality of neural network cores; and
   a format conversion procedure of converting a format of the plurality of pieces of distribution data on the basis of the read address.

### REFERENCE SIGNS LIST

100 Photodetection device
110 Optical section
120 DSP circuit
130 Display section
140 Operation section
150 Bus
160 Frame memory
170 Storage section
180 Power supply section
200 Sensor chip
201 Pixel chip
202, 203 Circuit chip
211, 212 Digital processing section
220 Format processing section
230 External communication interface
240 Address addition section
250 Pixel data conversion section
300 EVS
310, 620, 740 Pixel array section
320 Arbiter
330 Line scanner
400, 630, 750 Pixel
410 Pixel circuit
411, 751 Photodiode
412, 413, 435, 442, 444 nMOS transistor
414, 421, 422, 432, 434, 441, 443 pMOS transistor
420 Buffer
430 Differentiation circuit
431, 433 Capacitor
440 Quantizer
450 AER logic circuit
500 SNN circuit
510 Line buffer
520 Distribution section
530 Format conversion section
540 Format converter
541, 542 Parallel to serial converter
543 Decompression section
550 Network packet memory
551 Memory control section
552 Memory cell array
560 Multi-core array
561 SNN core
562 Routing circuit
600 Photon measurement circuit
610 Drive section
631 Quench resistor
632 SPAD
633 Inverter
634 Photon counter
640, 720 Timing control circuit
650 Readout processing section
700 CIS
710 Vertical scanning circuit
730 DAC
752 Transfer transistor
753 Reset transistor
754 Floating diffusion layer
755 Amplification transistor
756 Selection transistor
760 Column ADC
770 Horizontal transfer scanning circuit
12031 Imaging section

## Claims

1. A photodetection device comprising:
a sensor that reads from a predetermined read address of a pixel array section line data in which a plurality of pieces of pixel data is arranged and outputs the line data;
a distribution section that generates a plurality of pieces of distribution data from the line data and distributes the distribution data to a plurality of neural network cores; and
a format conversion section that converts a format of the plurality of pieces of distribution data on a basis of the read address.

2. The photodetection device according to claim 1, wherein
the format conversion section includes a plurality of format converters, and
each of the plurality of format converters includes:
a memory control section that reads a predetermined number of pieces of packet data from a memory address corresponding to the read address; and
a distribution data conversion section that converts the distribution data into a valid signal indicating whether or not a packet corresponding to each piece of the packet data is valid.

3. The photodetection device according to claim 1, wherein
the format conversion section includes a plurality of format converters, and
each of the plurality of format converters includes:
a memory control section that reads a predetermined number of pieces of compressed data from a memory address corresponding to the read address;
a decompression section that generates a predetermined number of pieces of the packet data by decompression for each piece of the compressed data; and
a distribution data conversion section that converts the distribution data into a valid signal indicating whether or not a packet corresponding to each piece of the packet data is valid.

4. The photodetection device according to claim 1, wherein
data sizes of the plurality of pieces of distribution data are same as each other.

5. The photodetection device according to claim 1, wherein
the distribution section reduces data sizes of the distribution data as a corresponding pixel group is closer to a center of the pixel array section.

6. The photodetection device according to claim 1, wherein
the sensor includes an event-based vision sensor (EVS), and each of the plurality of pieces of pixel data includes 1-bit data indicating whether or not a predetermined event has been detected.

7. The photodetection device according to claim 1, further comprising
a pixel data conversion section that converts each of the plurality of pieces of pixel data into 1-bit data.

8. The photodetection device according to claim 7, wherein
the sensor includes a photon measurement circuit that counts photons.

9. The photodetection device according to claim 7, wherein
the sensor includes a CMOS image sensor (CIS).

10. The photodetection device according to claim 1, wherein
the sensor, the distribution section, and the format conversion section are dispersedly disposed on a plurality of stacked chips.

11. A control method of a photodetection device, the control method comprising:
a readout procedure of, by a sensor, reading from a predetermined read address of a pixel array section line data in which a plurality of pieces of pixel data is arranged and outputting the line data;
a distribution procedure of generating a plurality of pieces of distribution data from the line data and distributing the distribution data to a plurality of neural network cores; and
a format conversion procedure of converting a format of the plurality of pieces of distribution data on a basis of the read address.
